# EUROPÄISCHE PATENTSCHRIFT

(11) **EP 3 317 950 B1**
(45) Veröffentlichungstag und Bekanntmachung des Hinweises auf die Patenterteilung: **15.04.2020**
(21) Anmeldenummer: 16726883.8
(22) Anmeldetag: 03.06.2016
(51) Int. Cl.: H02K 5/10, H02K 5/22, H01R 13/74

(54) **VERBINDUNGSSYSTEM ZUR STECKERPOSITIONIERUNG**
CONNECTIONSYSTEM FOR PLUG POSITIONING
SYSTÈME POUR POSITIONNEMENT DE PRISE

(30) Priorität: 26.08.2015 DE 102015114192
(43) Veröffentlichungstag der Anmeldung: 09.05.2018
(73) Patentinhaber: EBM-Papst Mulfingen GmbH&CO. KG, 74673 Mulfingen (DE)
(72) Erfinder: BERBERICH, Joachim, 74722 Buchen (DE); HOLDERBACH, Christoph, 74722 Buchen (DE); WOLFARTH, Stefanie, 97996 Niederstetten (DE); LUST, Alexander, 74182 Obersulm (DE); EHMANN, Tobias, 74632 Neuenstein (DE); KALLER, Andreas, 74613 Öhringen (DE)
(74) Vertreter: Staeger & Sperling Partnerschaftsgesellschaft mbB
(86) Internationale Anmeldenummer: PCT/EP2016/062677
(87) Internationale Veröffentlichungsnummer: WO 2017/032471

(56) Entgegenhaltungen:
- EP-A1- 1 367 695
- EP-A1- 2 216 552
- WO-A1-2014/104121
- DE-A1-102005 053 535
- DE-A1-102011 089 081
- DE-C1- 19 707 850

## Beschreibung

Die Erfindung betrifft ein Verbindungssystem zwischen einer Statorbaugruppe und einem in eine Öffnung eines Statorbuchsengehäuses ein- bzw. durchsteckbaren Steckergehäuse bei Elektromotoren.

Aus dem Stand der Technik ist bekannt, bei Elektromotoren die Kontaktierung über einen durch das Statorbuchsengehäuse nach außen geführten und in einem Steckergehäuse angeordneten Stecker zu ermöglichen. Das Steckergehäuse ist dabei positionsfest an der Statorbaugruppe befestigt, so dass während der Montage eine sehr exakte Ausrichtung der drei Bauteile Statorbaugruppe mit Steckergehäuse und Elektronikgehäuse nötig ist. Dies verlangsamt den Prozess und erhöht die Kosten. Zudem sind Qualitätseinbußen durch nicht fluchtende Steckerverbindungen beim Fügen der Elektronikeinheit hinzunehmen.

Druckschriftlicher Stand der Technik ist der Patentliteratur DE 10 005 053 535 A1, WO 2014/104121 A, EP 1367 695 A1, DE 197 07 850 C1 und EP 2 216 552 A1 offenbart.

Der Erfindung liegt deshalb die Aufgabe zugrunde, ein Verbindungssystem zwischen der Statorbaugruppe und dem in die Öffnung des Statorbuchsengehäuses zu steckenden Steckergehäuses bereit zu stellen, das eine Ausrichtung der drei Bauteile durch eine relative Beweglichkeit zueinander ermöglicht, somit die Montage erleichtert und das Montageergebnis verbessert.

Diese Aufgabe wird gelöst durch eine Merkmalskombination gemäß Patentanspruch 1 .

Erfindungsgemäß wird ein Verbindungssystem einer Statorbaugruppe und eines in eine Öffnung eines Statorbuchsengehäuses einsteckbaren Steckergehäuses vorgeschlagen, wobei an der Statorbaugruppe eine Steckergehäuseaufnahme ausgebildet ist, an der das Steckergehäuse im montierten Zustand in zumindest zwei senkrecht zueinander stehenden Richtungen relativ zur Statorbaugruppe beweglich befestigt ist. Hierdurch entsteht eine Art schwimmende Lagerung bzw. Aufnahme des Steckergehäuses mit dem darin aufgenommenen Stecker an der Statorbaugruppe, so dass die drei Bauteile Statorbuchsengehäuse, Steckergehäuse und Statorbaugruppe relativ in zumindest zwei Richtungen zueinander beweglich sind. Bei der Montage wird üblicherweise die Statorbaugruppe mit daran befestigtem Stator an das Statorbuchsengehäuse geführt und das Steckergehäuse durch die Öffnung des Statorbuchsengehäuses gesteckt bzw. gepresst. Die Position der Statorbaugruppe ist erfindungsgemäß nicht fixiert, sondern kann durch die relative Beweglichkeit an das Statorbuchsengehäuse angedrückt werden, ohne dass die Bauteile zueinander verkanten, wodurch sonst ungewollte Spannungen entstehen würden. Die Bauteile Statorbuchsengehäuse, Statorbaugruppe und Steckergehäuse werden durch die vorgesehene Beweglichkeit entkoppelt, so dass Toleranzen der einzelnen Bauteile selbständig ausgeglichen werden können.

Als Statorbaugruppe ist der Stator in einer Aufnahme zur Befestigung an dem Statorbuchsengehäuse bestimmt.

in einer günstigen Ausführungsvariante ist vorgesehen, dass von den zumindest zwei zueinander senkrechten Richtungen eine die radiale Richtung und/oder die Umfangsrichtung ist. Vorzugsweise sind es jedoch diese beiden Richtungen. Soweit es sich nicht um ein rundes Bauteil handelt, ist als "radiale Richtung" eine vom Mittelpunkt von innen nach außen gerichtete Richtung definiert, die bei einer gedachten runden Form gegeben wäre. Die Beweglichkeit in radialer und in Umfangsrichtung ermöglicht ein Einstecken des Steckergehäuses in das Statorbuchsengehäuse, wobei die Statorbaugruppe in einer Ebene parallel zur Öffnungsoberflächenebene in zwei Richtungen beweglich bleibt.

Erfindungsgemäß sind an dem Steckergehäuse Befestigungsmittel angeordnet, die im montierten Zustand befestigend in Aussparungen an der Steckergehäuseaufnahme eingreifen. Dabei ist das Steckergehäuse über die Befestigungsmittel im montierten Zustand in den Aussparungen in radialer Richtung sowie in Umfangsrichtung bewegbar. Der Eingriff der Befestigungsmittel fixiert das Steckergehäuse mit dem darin angeordneten Stecker zur Kontaktierung an der Steckergehäuseaufnahme und verhindert ein Lösen der Bauteile in axialer Richtung. Gleichzeitig sind die Befestigungsmittel ausgebildet, den Eingriff nicht statisch und positionsfest auszuüben, sondern zwei Freiheitsgrade bestehen zu lassen. Hierdurch wird eine Relativbewegung zwischen Steckergehäuse, Steckergehäuseaufnahme und Statorbuchsengehäuse in einer Ebene in radialer Richtung und Umfangsrichtung gewährleistet.

Als erfindungsgemäße Ausführung der Befestigungsmittel ist vorgesehen, diese als Doppelhaken mit in radialer Richtung beabstandeten und elastisch beweglichen Hakenschenkeln auszubilden, die durch die Aussparungen der Steckergehäuseaufnahme hindurchführbar sind und im montierten Zustand Randabschnitte der Aussparungen hintergreifen. Hierfür weisen die Hakenschenkel entsprechend geformte Köpfe auf, die ein arretierendes Einschnappen ermöglichen. Die Elastizität und Beabstandung der Hakenschenkel macht sie relativ zueinander in radialer Richtung beweglich. Diese Bewegung überträgt sich auf das Steckergehäuse insgesamt und ermöglicht die Relativbewegung zur Steckergehäuseaufnahme,

Eine Beweglichkeit in Umfangsrichtung wird in einer Ausführung ebenfalls durch die Hakenschenkel, insbesondere das Verhältnis ihrer Größe gegenüber der Größe der Aussparungen in der Steckergehäuseaufnahme realisiert. Hierzu wird vorgesehen, dass die Breite der Hakenschenkel kleiner ist als Breite der Aussparung, wobei die Breite sich in Umfangsrichtung oder entlang einer Tangente zur Umfangsrichtung erstreckt. Die Hakenschenkel sind somit in den Aussparungen seitlich verschiebbar, so dass eine Relativbewegung zwischen Steckergehäuse und Steckergehäuseaufnahme in eine zweite Richtung ermöglicht ist.

Bei der erfindungsgemäßen Ausführungsvariante ist die Steckergehäuseaufnahme zumindest in axialer Richtung über mindestens eine Feder federnd an der Statorbaugruppe gehalten.

Die axiale Richtung ist gegenüber beiden oben beschriebenen relativen Bewegungsrichtungen senkrecht und bestimmt die Richtung, in der die Bauteile Statorbuchsengehäuse und Statorbaugruppe aufeinander aufliegen sowie die Richtung, in der das Steckergehäuse in die Öffnung des Statorbuchsengehäuses gesteckt wird. Dabei ist günstig, dass die mindestens eine Feder in axialer Richtung eine Vorspannkraft auf die Steckergehäuseaufnahme und das im montierten Zustand daran befestigte Steckergehäuse erzeugt. Das Steckergehäuse kann somit an das Statorbuchsengehäuse angedrückt und in diesem Zustand befestigt werden. In einer vorteilhaften Ausführungsform wird die mindestens eine Feder durch mindestens einen Schenkel gebildet wird, der die Steckergehäuseaufnahme und die Statorbaugruppe einteilig verbindet. Vorzugsweise wird das Steckergehäuseaufnahme von zwei Seiten durch zwei Schenkel gehalten, die jeweils eine Federfunktion in Form einer Welle der Schenkel realisiert. Die Steckergehäuseaufnahme ist in einer Ausführungsvariante einteilig an der Statorbaugruppe ausgebildet und steht in radialer Richtung gegenüber angrenzenden Abschnitten der Statorbaugruppe frei hängend hervor. Diese Form ist ebenfalls durch die Schenkel realisierbar.

Ferner ist günstig, wenn an dem Steckergehäuse mindestens ein Anschlag angeordnet ist, der eine durch die Feder bedingte relative axiale Beweglichkeit der Steckergehäuseaufnahme gegenüber der Statorbaugruppe begrenzt. Der Anschlag kann als sich in axialer Richtung erstreckender Bolzen ausgebildet sein, der so an der Steckergehäuseaufnahme angeordnet ist und eine Erstreckung aufweist, dass er bei einer maximalen axialen Auslenkung der Steckergehäuseaufnahme gegenüber der Statorbaugruppe an der Statorbaugruppe zum Anschlag kommt.

In einer Weiterentwicklung des Verbindungssystems ist vorgesehen, dass an einem Abschnitt des Steckergehäuses, der ausgebildet ist, durch die Öffnung des Statorbuchsengehäuses gesteckt zu werden, außenseitig sich in axialer Richtung erstreckende Einlaufschrägen ausgebildet sind. Die Einlaufschrägen dienen als Führungen für das Steckergehäuse in der Öffnung des Statorbuchsengehäuses. Die Einlaufschrägen sind dabei so ausgebildet, dass sich ein Querschnitt des Steckergehäuses von einem axialen Ende, das zuerst in die Öffnung eingeführt wird, in axialer Richtung vergrößert, bis das Steckergehäuse vollflächig an der Innenwand der Öffnung in dem Statorbuchsengehäuse anliegt.

Das Steckergehäuse weist vorzugsweise zudem mindestens ein Gewinde auf, über das es in einem in die Öffnung des Statorbuchsengehäuses eingesteckten Zustand an dem Statorbuchsengehäuse verschraubbar ist. Zudem wird optional zwischen dem Steckergehäuse und dem Statorbuchsengehäuse eine Dichtung angeordnet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Gesamtansicht eines Verbindungssystems;
- Fig. 2: das Verbindungssystem aus Figur 1 in einer Schnittansicht von vorne;
- Fig. 3: eine Detailansicht des Verbindungssystems aus Figur 1;
- Fig. 4: eine perspektivische Ansicht des Steckergehäuses.

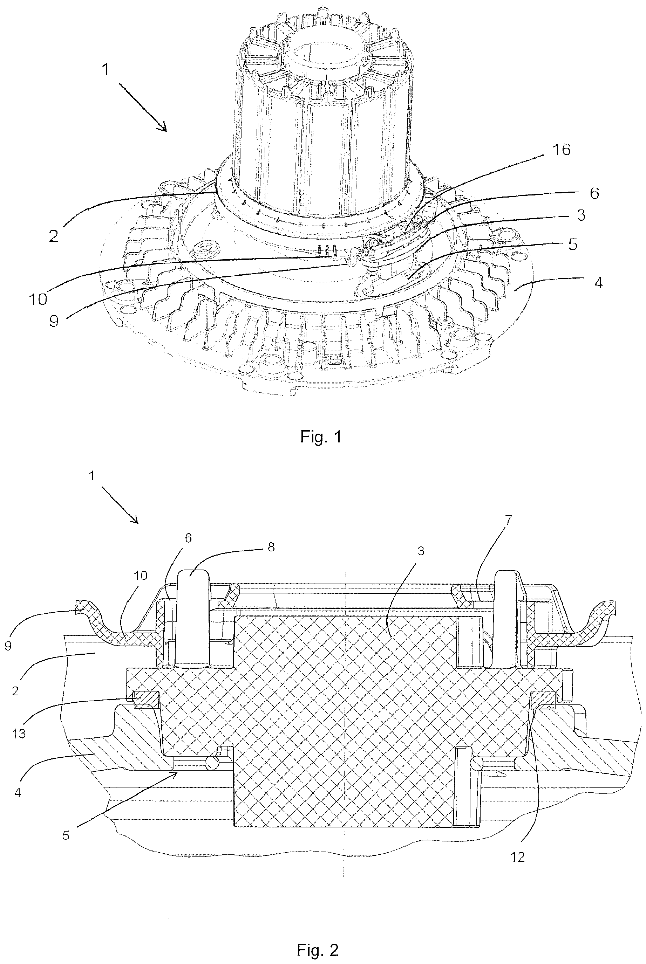

Die Figuren 1 - 4 betreffen ein Ausführungsbeispiel, so dass gleiche Bezugszeichen stets gleiche Teile benennen.

Figur 1 zeigt eine Gesamtansicht eines Verbindungssystems der Statorbaugruppe 2 und dem Steckergehäuse 3, das in die Öffnung 5 des Statorbuchsengehäuses 4 eingesteckt wird. In dem Steckergehäuse 3 ist der Steckkontakt 16 zur Kontaktierung des Elektromotors aufgenommen. Innerhalb der Statorbaugruppe 2 verlaufen die Kabel des Elektromotors nach außen und in den Steckkontakt 16.

In Figur 2 ist das Verbindungssystem aus Figur 1 in einer Schnittansicht von vorne dargestellt. An der Statorbaugruppe 2 ist einteilig und radial vorstehend die Steckergehäuseaufnahme 6 ausgebildet und über zwei Schenkel 10 gehalten. Zur in radialer und in Umfangsrichtung beweglichen Befestigung des Steckergehäuses 3 an der Steckergehäuseaufnahme 6 sind an dem Steckergehäuse 3 zwei Doppelhaken mit in radialer Richtung beabstandeten und elastisch beweglichen Hakenschenkeln 8 ausgebildet, die im gezeigten montierten Zustand durch die Aussparungen 7 an der Steckergehäuseaufnahme 6 hindurchgeführt sind und deren Randabschnitte hintergreifen. Die Beweglichkeit des Steckergehäuses 3 relativ zur Steckergehäuseaufnahme 6 in Umfangsrichtung wird dadurch realisiert, dass die Breite der Hakenschenkel 8 kleiner ist als die Breite der Aussparung 7 und die Hakenschenkel 8 somit in Umfangsrichtung versetzbar sind. Die Ausbildung als elastische Doppelhaken ermöglicht die Beweglichkeit der Hakenschenkel 8 zueinander in einem in den Aussparungen 7 fixierten Zustand in radialer Richtung und mithin die Bewegung des Steckergehäuses 3 relativ zur Steckergehäuseaufnahme 6 in radialer Richtung.

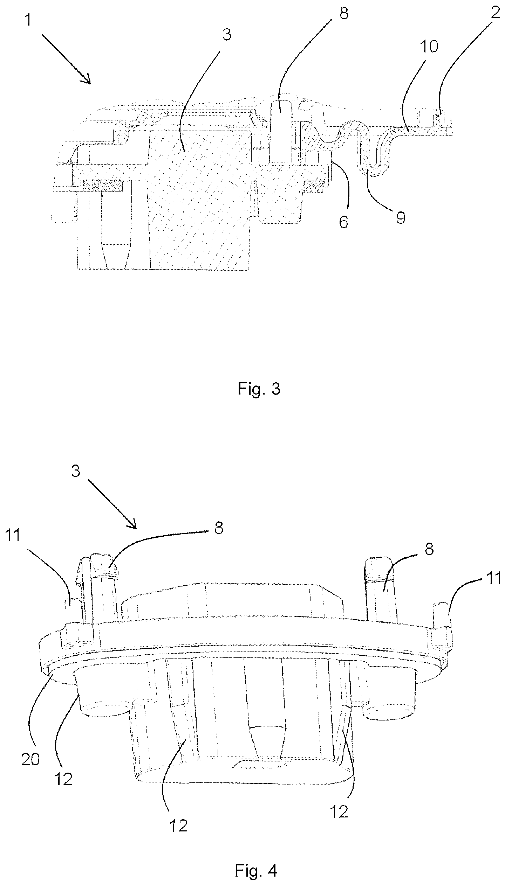

Wie in Figur 3 zu erkennen sind an den Schenkeln 10 zur vorstehenden und fei hängenden Halterung der Steckergehäuseaufnahme 6 an der Statorbaugruppe 2 jeweils Schenkel 10 mit Federn 9 in Form einer Materialwelle ausgebildet, die in axialer Richtung eine Vorspannung auf die Steckergehäuseaufnahme 6 und das im montierten Zustand daran befestigte Steckergehäuse 3 ausübt, wodurch das Steckergehäuse 3 an das Statorbuchsengehäuse 4 gedrückt wird. Über jeweils einen sich in axialer Richtung erstreckenden Anschlag 11 wird die relative axiale Beweglichkeit der Steckergehäuseaufnahme 6 gegenüber der Statorbaugruppe 2 begrenzt.

Figur 4 zeigt eine perspektivische Ansicht des Steckergehäuses 3, das an seinem durch die Öffnung 5 des Statorbuchsengehäuses 4 zu steckenden Abschnitt außenseitig und sich in axialer Richtung erstreckende Einlaufschrägen 12 aufweist, die durch eine Verringerung des Querschnitts ein Einsetzen in die Öffnung 5 des Statorbuchsengehäuses 4 erleichtern. Die Einlaufschrägen sind teils keilförmig, teils konisch ausgebildet. Zwischen dem Statorbuchsengehäuse 4 und dem Steckergehäuse 3 ist eine Dichtung 13 vorgesehen, mit der auch die durch die Einlaufschrägen 12 gebildeten Freiräume abgedichtet sind. Mit der Auflagefläche 20 liegt das Steckergehäuse 3 im montierten Zustand auf dem Statorbuchsengehäuse 4 auf.

Zur Montage wird das Steckergehäuse 3 im an der Steckergehäuseaufnahme 6 befestigten Zustand durch die Öffnung 5 des Statorbuchsengehäuses 4 gesteckt und über nicht dargestellte Schrauben im eingesteckten Zustand über die Federn 9 in axialer Richtung vorgespannt befestigt. Die einteilig mit der Steckergehäuseaufnahme 6 verbundene Statorbaugruppe 2 ist relativ trotzdem weiter über zwei Freiheitsgrade radial sowie in Umfangsrichtung beweglich und kann an ihre vorbestimmte Position an dem Statorbuchsengehäuse 4 gesetzt werden, ohne, dass es zu einer Verkantung gegenüber dem Steckergehäuse 3 kommt.

Die Erfindung beschränkt sich in ihrer Ausführung nicht auf die vorstehend angegebenen bevorzugten Ausführungsbeispiele. Vielmehr ist eine Anzahl von Varianten umfasst, welche von der dargestellten Lösung auch bei grundsätzlich anders gearteten Ausführungen Gebrauch macht und durch die beiliegenden Patentansprüche definiert ist. Beispielsweise sind verschiedene Materialien für das Steckergehäuse vorsehbar, wobei es vorzugsweise aus spritzgegossenem Kunststoff gebildet ist.

## Patentansprüche

1. Verbindungssystem einer Statorbaugruppe (2), die durch einen Stator in einer Aufnahme zur Befestigung an einem Statorbuchsengehäuse (4) bestimmt ist, und eines in eine Öffnung (5) des Statorbuchsengehäuses (4) einsteckbaren Steckergehäuses (3), wobei an der Statorbaugruppe (2) eine Steckergehäuseaufnahme (6) ausgebildet ist, an der das Steckergehäuse (3) im montierten Zustand in zumindest zwei senkrecht zueinander stehenden Richtungen relativ zur Statorbaugruppe (2) beweglich befestigt ist, wobei die Steckergehäuseaufnahme (6) zumindest in axialer Richtung über mindestens eine Feder (9) federnd an der Statorbaugruppe (2) gehalten ist, und wobei die mindestens eine Feder (9) in axialer Richtung eine Vorspannkraft auf die Steckergehäuseaufnahme (6) und das im montierten Zustand daran befestigte Steckergehäuse (3) erzeugt, wobei die axiale Richtung senkrecht gegenüber der zwei senkrecht zueinander stehenden Richtungen ist und die Richtung bestimmt, in der das Statorbuchsengehäuse (4) und die Statorbaugruppe (2) aufeinander aufliegen und in der das Steckergehäuse (3) in die Öffnung (5) des Statorbuchsengehäuses (4) gesteckt wird, **dadurch gekennzeichnet dass** an dem Steckergehäuse (3) Befestigungsmittel angeordnet sind, die in einem montierten Zustand befestigend in Aussparungen (7) an der Steckergehäuseaufnahme (6) eingreifen, und wobei die Befestigungsmittel als Doppelhaken mit in radialer Richtung beabstandeten und elastisch beweglichen Hakenschenkeln (8) ausgebildet sind, die durch die Aussparungen (7) hindurchführbar sind und im montierten Zustand deren Randabschnitte hintergreifen, wobei die Hakenschenkel (8) Köpfe aufweisen, die ein arretierendes Einschnappen ermöglichen.

2. Verbindungssystem nach Anspruch 1, **dadurch gekennzeichnet, dass** eine der zumindest zwei Richtungen eine radiale Richtung ist.

3. Verbindungssystem nach Anspruch 1 oder 2, **dadurch gekennzeichnet, dass** eine der zumindest zwei Richtungen eine Umfangsrichtung ist.

4. Verbindungssystem nach Anspruch 1, **dadurch gekennzeichnet, dass** eine Breite der Hakenschenkel (8) kleiner ist als Breite der Aussparung (7).

5. Verbindungssystem nach Anspruch 1, **dadurch gekennzeichnet, dass** die mindestens eine Feder (9) durch mindestens einen Schenkel (10) gebildet wird, der die Steckergehäuseaufnahme (6) und die Statorbaugruppe (2) einteilig verbindet.

6. Verbindungssystem nach einem der vorigen Ansprüche 1 bis 5, **dadurch gekennzeichnet, dass** an dem Steckergehäuse (3) mindestens ein Anschlag (11) angeordnet ist, der eine durch die Feder (9) bedingte relative axiale Beweglichkeit der Steckergehäuseaufnahme (6) gegenüber der Statorbaugruppe (2) begrenzt.

7. Verbindungssystem nach zumindest einem der vorigen Ansprüche, **dadurch gekennzeichnet, dass** die Steckergehäuseaufnahme (6) einteilig an der Statorbaugruppe (2) ausgebildet ist und in radialer Richtung gegenüber angrenzenden Abschnitten der Statorbaugruppe (2) hervorsteht.

8. Verbindungssystem nach dem vorigen Anspruch, **dadurch gekennzeichnet, dass** an einem Abschnitt des Steckergehäuses (3), der ausgebildet ist, durch die Öffnung (5) des Statorbuchsengehäuses (4) gesteckt zu werden, außenseitig sich in axialer Richtung erstreckende Einlaufschrägen (12) ausgebildet sind.

9. Verbindungssystem nach dem vorigen Anspruch, **dadurch gekennzeichnet, dass** das Steckergehäuse (3) mindestens ein Gewinde aufweist, über das es in einem in die Öffnung (5) des Statorbuchsengehäuses (4) eingesteckten Zustand an dem Statorbuchsengehäuse (4) verschraubbar ist.

10. Verbindungssystem nach zumindest einem der vorigen Ansprüche, **dadurch gekennzeichnet, dass** zwischen dem Steckergehäuse (3) und dem Statorbuchsengehäuse (4) eine Dichtung (13) angeordnet ist.

## Claims

1. Connecting system of a stator assembly (2) defined by a stator in a receptacle for attachment to a stator housing (4), and a plug housing (3) that can be inserted into an opening (5) in the stator housing (4), wherein a plug housing receptacle (6) is provided on the stator assembly (2), to which the plug housing (3) is attached such that it is movable relative to the stator assembly (2) in at least two perpendicular directions when mounted, wherein the plug housing receptacle (6) is attached elastically to the stator assembly (2) in at least the axial direction by at least one spring (9) and wherein the at least one spring (9) creates a preload force in axial direction onto the plug housing receptacle (6) and the plug housing (3) attached to the same when mounted, wherein the axial direction is perpendicular to the two mutually perpendicular directions and determines the direction in which the stator housing (4) and the stator assembly (2) rest on one another and in which the plug housing (3) is inserted into the opening (5) of the stator housing (4), **characterized in that** fastening means are arranged on the plug housing (3), which engage with recesses (7) in the plug housing receptacle (6) when mounted, and wherein the fastening means are designed as double hooks with flexible hook shanks (8) that are spaced apart in a radial direction, which can be passed through the recesses (7) and which engage with the edges on the other side of the recesses when mounted, wherein the hook shanks (8) have heads which enable a locking snap-in.

2. Connecting system according to claim 1, **characterized in that** one of the at least two directions is a radial direction.

3. Connecting system according to claims 1 and 2, **characterized in that** one of the at least two directions is a circumferential direction.

4. Connecting system according to claim 1, **characterized in that** a width of the hook shanks (8) is smaller than the width of the recess (7).

5. Connecting system according to claim 1, **characterized in that** the at least one spring (9) is formed by a shank (10) which integrally connects the plug housing receptacle (6) and the stator assembly (2).

6. Connecting system according to one of the preceding claims 1 to 5, **characterized in that** at least one limit stop (11) is arranged on the plug housing (3), which limits the relative axial movability of the plug housing receptacle (6) allowed by the at least one spring (9) relative to the stator assembly (2).

7. Connecting system according to at least one of the preceding claims, **characterized in that** the plug housing receptacle (6) is integral to the stator assembly (2) and protrudes past adjacent sections of the stator assembly (2) in the radial direction.

8. Connecting system according to the preceding claim, **characterized in that** beveled slots (12) extending in an axial direction are provided on the outer wall of the section of the plug housing (3), which is designed to be passed through the opening (5) on the stator housing (4).

9. Connecting system according to the preceding claim, **characterized in that** the plug housing (3) includes at least one thread, whereby it can be bolted to the stator housing (4) when inserted into the opening (5) on the stator housing (4).

10. Connecting system according to at least one of the preceding claims, **characterized in that** a seal (13) is arranged between the plug housing (3) and the stator housing (4).

## Revendications

1. Système de connexion d'un ensemble stator (2), qui est déterminé par un stator dans un logement pour la fixation au niveau d'un boîtier de douille de stator (4), et d'un boîtier de prise (3) enfichable dans une ouverture (5) du boîtier de douille de stator (4), dans lequel un logement de boîtier de prise (6) est réalisé au niveau de l'ensemble stator (2), au niveau duquel le boîtier de prise (3) est fixé mobile à l'état monté dans au moins deux directions perpendiculaires l'une à l'autre par rapport à l'ensemble stator (2), dans lequel le logement de boîtier de prise (6) est maintenu de manière élastique au niveau de l'ensemble stator (2) au moins dans la direction axiale par le biais d'au moins un ressort (9), et dans lequel l'au moins un ressort (9) génère dans la direction axiale une force de précontrainte sur le logement de boîtier de prise (6) et le boîtier de prise (3) y est fixé à l'état monté, dans lequel la direction axiale est perpendiculaire par rapport aux deux directions perpendiculaires l'une à l'autre et détermine la direction, dans laquelle le boîtier de douille de stator (4) et l'ensemble stator (2) reposent l'un sur l'autre et dans laquelle le boîtier de prise (3) est enfiché dans l'ouverture (5) du boîtier de douille de stator (4), **caractérisé en ce que** des moyens de fixation, qui entrent en prise dans un état monté en se fixant dans des évidements (7) au niveau du logement de boîtier de prise (6), sont agencés au niveau du boîtier de prise (3), et dans lequel les moyens de fixation sont réalisés en tant que double crochet avec des branches de crochet (8) élastiquement mobiles et espacées dans la direction radiale, qui peuvent être guidés à travers les évidements (7) et viennent en prise derrière à l'état monté de leurs sections de bord, dans lequel les branches de crochet (8) présentent des têtes, qui permettent un enclenchement bloquant.

2. Système de connexion selon la revendication 1, **caractérisé en ce qu'**une des au moins deux directions est une direction radiale.

3. Système de connexion selon la revendication 1 ou 2, **caractérisé en ce qu'**une des au moins deux directions est une direction circonférentielle.

4. Système de connexion selon la revendication 1, **caractérisé en ce qu'**une largeur des branches de crochet (8) est inférieure à la largeur de l'évidement (7).

5. Système de connexion selon la revendication 1, **caractérisé en ce que** l'au moins un ressort (9) est formé par au moins une branche (10), qui relie d'un seul tenant le logement de boîtier de prise (6) et l'ensemble stator (2).

6. Système de connexion selon l'une quelconque des revendications précédentes 1 à 5, **caractérisé en ce qu'**au moins une butée (11) est agencée au niveau du boîtier de prise (3), qui délimite une mobilité axiale relative conditionnée par le ressort (9) du logement de boîtier de prise (6) par rapport à l'ensemble stator (2).

7. Système de connexion selon au moins l'une quelconque des revendications précédentes, **caractérisé en ce que** le logement de boîtier de prise (6) est réalisé d'un seul tenant au niveau de l'ensemble stator (2) et fait saillie dans la direction radiale par rapport à des sections adjacentes de l'ensemble stator (2).

8. Système de connexion selon la revendication précédente, **caractérisé en ce que** des biseaux d'engagement (12) s'étendant dans la direction axiale sont réalisés côté extérieur au niveau d'une section du boîtier de prise (3), qui est réalisée pour être enfichée par l'ouverture (5) du boîtier de douille de stator (4).

9. Système de connexion selon la revendication précédente, **caractérisé en ce que** le boîtier de prise (3) présente au moins un filetage, par le biais duquel il peut être vissé dans un état enfiché dans l'ouverture (5) du boîtier de douille de stator (4) au niveau du boîtier de douille de stator (4).

10. Système de connexion selon au moins l'une quelconque des revendications précédentes, **caractérisé en ce qu'**un joint d'étanchéité (13) est agencé entre le boîtier de prise (3) et le boîtier de douille de stator (4).
